(19)

Europäisches Patentamt
European Patent Office
Office européen des brevets

(11) **EP 3 118 858 A1**

(12) **EUROPEAN PATENT APPLICATION**
published in accordance with Art. 153(4) EPC

(43) Date of publication:
**18.01.2017 Bulletin 2017/03**

(21) Application number: **15761608.7**

(22) Date of filing: **10.03.2015**

(51) Int Cl.:
*H01B 7/02* [(2006.01)]   *H01B 3/30* [(2006.01)]
*H01B 3/42* [(2006.01)]   *H01B 7/00* [(2006.01)]
*H01B 13/00* [(2006.01)]   *H01B 13/16* [(2006.01)]
*H02K 3/04* [(2006.01)]   *H02K 3/34* [(2006.01)]

(86) International application number:
**PCT/JP2015/057021**

(87) International publication number:
**WO 2015/137342 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.03.2014 JP 2014051924**

(71) Applicants:
• **Furukawa Electric Co., Ltd.**
**Chiyoda-ku**
**Tokyo 100-8322 (JP)**

• **Furukawa Magnet Wire Co., Ltd.**
**Tokyo 100-0005 (JP)**

(72) Inventors:
• **ISHII, Yohei**
**Tokyo 100-8322 (JP)**
• **AOI, Tsuneo**
**Tokyo 100-8322 (JP)**

(74) Representative: **Forstmeyer, Dietmar et al**
**BOETERS & LIECK**
**Oberanger 32**
**80331 München (DE)**

(54) **INSULATION WIRE, INSULATION WIRE MANUFACTURING METHOD, METHOD OF MANUFACTURING STATOR FOR ROTARY ELECTRIC MACHINE AND ROTARY ELECTRIC MACHINE**

(57)    An insulated wire having a conductor coated with at least one layer of an insulating material, and having at least one layer of a bubble layer in a thickness direction in a coating layer, wherein the insulated wire has a part in which a thickness is small in a length direction or a circumferential direction in an identical coating layer; a method of producing the same; a method of producing a stator for a rotating electrical machine; and the rotating electrical machine.

Step ( I )

*Fig. 7(a1)*          *Fig. 7(b1)*

**(Cont. next page)**

EP 3 118 858 A1

Step （Ⅱ）

Fig. 7(a2)

Fig. 7(b2)

Step （Ⅲ）

$z_1$

$z_2$

Fig. 7(a3)

$z_1z_2$ cross-section

Fig. 7(b3)    Fig. 7(c3)

**Description**

TECHNICAL FIELD

The present invention relates to an insulated wire, a method of producing the insulated wire, a method of producing a stator for a rotating electrical machine, and a rotating electrical machine

BACKGROUND ART

In a rotating electrical machine, such as an automobile and a motor for general industries, a demand has grown for high output and size reduction with high density. With regard to the size reduction, insulated wires are made into the cross-section rectangular form, in order to improve conductor occupancy in a slot of a stator core of the rotating electrical machine. In recent years, in the rotating electrical machine, the insulated wire is cut and turn-processed into U-shape or the like, and two ends (open end portions) of the U-shape or the like of a plurality of the insulated wires having U-shape or the like are alternately connected into a coil, and set in the slots of the stator core.

This coil (insulated wire divided segments) of the thus connected insulated wire having U shape or the like is constituted of: a slot housing portion (slot straight-line portion) to be housed in the slot; and a coil end portion that is not housed in the slot (a turn portion having U shape or the like, and open end portions being two ends). Two linear slot housing portions of the coil of the insulated wire having U-shape or the like are set in different slots, respectively. On the other hand, curved coil end portions having U-shape or the like, and coil end portions in the open end portions are aligned in a state in which both are not housed in the slots, and protruded therefrom in parts above and below the slots, and the coil end portions in the open end portions and other coil open end portions are connected and wired. Thus, achievement of higher density is attempted, by further shortening the coil end portions.

On the other hand, high output is achieved, by achievement of high voltage, high current, and high rotation in the rotating electrical machine.

Herein, the coil is formed by bundling a plurality of insulation-covered conductors vertically, horizontally, or vertically and horizontally, and when necessary, the plurality of these bundled insulated wires are wholly covered with resin for electric field relaxation or achievement of insulation.

However, at a conventional high voltage exceeding a specified voltage at several of kHz to several tens of kHz, insulation performance has been insufficient by the coil or the insulated wire to be used in the rotating electrical machine. In particular, durability in a long-term use is required.

Specifically, corona discharge is generated among coated conductors (among a plurality of bundled coated conductors) at predetermined electric field intensity or more, and the durability is adversely affected. As the durability, it is strongly required to suppress this corona discharge, namely partial discharge deterioration to a minimum.

In general, the partial discharge deterioration is a phenomenon in which an insulating material complexly receives molecular chain scission deterioration by collision of charged particles generated by partial discharge thereof, sputtering deterioration, thermal fusion or thermal decomposition deterioration by a local temperature rise, chemical deterioration by ozone generated by electric discharge, and the like. Thus, thickness is reduced, in several cases, in the insulating material that is deteriorated by actual partial discharge.

In order to prevent deterioration by partial discharge, development has been made on increasing partial discharge inception voltage. In the case of a distributed winding rotating electrical machine, this partial discharge deterioration is apt to cause in a curved coil end portion having U-shape or the like that is neither housed nor fixed in the slot. In order to solve this problem, proposals have been made on varying a thickness of an insulation coating with which a conductor is coated, and an insulating material with which the conductor is coated, in the above-described slot housing portions and the coil end portions of the coils of insulated wires (see Patent Literature 1). Moreover, as a method of increasing the partial discharge inception voltage, proposals also have been made on a method in which a bubble layer (or a cellular layer) is arranged in a coating layer, to reduce relative permittivity (see Patent Literature 2).

Herein, for high output and size reduction, it is also an effective means to increase occupancy of the conductors of insulated wires occupied in slot space, and in order to reduce space generated among the conductors, a cross-sectional shape of the conductor is transiting from a circular shape to a rectangular shape. In order to further increase the conductor occupancy in a rectangular conductor, a thickness of the insulation coating is reduced, which causes deterioration of insulation performance and durability as described above.

CITATION LIST

PATENT LITERATURE

Patent Literature 1: JP-A-2008-236924 ("JP-A" means unexamined published Japanese patent application)
Patent Literature 2: Japanese Patent No. 5391365

## SUMMARY OF INVENTION

### TECHNICAL PROBLEM

It is a problem with high difficulty as mentioned above to increase conductor occupancy in slot space for high output, while durability based on partial discharge deterioration is maintained at a high level.

On the other hand, in order to vary a thickness of an insulation coating with which a conductor is coated, and an insulating material with which the conductor is coated in slot housing portions and coil end portions for coils of insulated wires as proposed in Patent Literature 1, a complicated producing process is required, and such an art also has a problem in terms of producing costs.

Accordingly, the present invention is contemplated for solving the above-described problems as the first task.

That is, the present invention is contemplated for providing: an insulated wire in which, for high output and size reduction, partial discharge inception voltage is maintained at a high level, and the conductor occupancy in a slot is high; a method of producing the insulated wire; a method of producing a stator for a rotating electrical machine; and the rotating electrical machine.

Further, the present invention is contemplated for providing: a method of producing an insulated wire in which such an excellent insulated wire can be produced by a simple and inexpensive producing process without requiring a complicated producing process; and a method of producing a stator for a rotating electrical machine.

### SOLUTION TO PROBLEM

The inventors of the present invention conducted various studies to solve the above-described problems. In particular, the inventors conducted studies centering neither on a thickness of a part serving as a coil end portion of an insulated wire and a part serving as a slot housing portion thereof nor on varying an insulating material, but on a means for suppressing corona discharge in the coil end portion by using an identical insulating material. As a result, the inventors have found that, if an insulated wire having a bubble layer (or a cellular layer) that is effective for suppressing corona discharge is applied, a thickness of a part of the insulated wire to be housed in the slot can be compressed in order to improve conductor occupancy in a slot, and thus the conductor occupancy can be increased without requiring a complicated producing process, while durability of the insulated wire is maintained at a high level. The present invention was completed based on these findings.

That is, the present invention it to provide the following means:

(1) An insulated wire having a conductor coated with at least one layer of an insulating material, and having at least one layer of a bubble layer in a thickness direction in a coating layer, wherein the insulated wire has a part in which a thickness is small in a length direction or a circumferential direction in an identical coating layer.

(2) The insulated wire described in the item (1), wherein the part in which the thickness is small is compressed in the thickness direction and the thickness is reduced.

(3) The insulated wire described in the item (1) or (2), wherein a resin in the coating layer is a resin selected from polyester, polyesterimide, polyimide, polyamideimide, polyphenylene sulfide and polyether ether ketone.

(4) The insulated wire described in any one of the items (1) to (3), wherein a resin in the bubble layer is a thermosetting resin selected from polyester, polyesterimide, polyimide and polyamideimide, or a thermoplastic resin selected from polyethylene naphthalate, polyethylene terephthalate, polyphenylene sulfide and polyether ether ketone.

(5) The insulated wire described in any one of the items (1) to (4), wherein the coating layer is composed of the bubble layer and at least one layer having no bubble (no cell), and a resin in the layer having no bubble is a thermoplastic resin selected from polyphenylene sulfide and polyether ether ketone.

(6) The insulated wire described in any one of the items (1) to (5), wherein a cross-sectional shape of the conductor is circular or rectangular.

(7) The insulated wire described in any one of the items (1) to (6), where a cross-sectional shape of the conductor is rectangular, and a thickness of the coating layer of one side in a rectangular cross section is smaller than a thickness of the coating layer of the other sides.

(8) The insulated wire described in any one of the items (1) to (6), wherein a cross-sectional shape of the conductor is rectangular, and both of thicknesses of the coating layer of two short sides facing to each other in a rectangular cross section are smaller than thicknesses of the coating layer of two long sides facing to each other.

(9) The insulated wire described in any one of the items (1) to (6), wherein a cross-sectional shape of the conductor is rectangular, and both of thicknesses of the coating layer of two long sides facing to each other in a rectangular cross section are smaller than thicknesses of the coating layer of two short sides facing to each other.

(10) The insulated wire described in any one of the items (1) to (6), wherein a cross-sectional shape of the conductor is rectangular, and thicknesses of the coating layer of two sides adjacent to each other in a rectangular cross section are smaller than thicknesses of the coating layer of remaining two sides.

(11) The insulated wire described in any one of the items (1) to (6), wherein a cross-sectional shape of the conductor is rectangular, and thicknesses of the coating layer of three sides in a rectangular cross section are smaller than a thickness of the coating layer of a remaining one side.

(12) A method of producing the insulated wire described in any one of the items (1) to (11), wherein the coating layer is compressed in a thickness direction, to form the part in which the thickness is small in the length direction or the circumferential direction in an identical coating layer.

(13) A method of producing a stator for a rotating electrical machine having an insulated wire, wherein the insulated wire has a conductor coated with at least one layer of an insulating material and having at least one layer of a bubble layer in a thickness direction in a coating layer, and upon arranging the insulated wire in a slot of a stator, a thickness of a coating of the insulated wire positioned in a boundary between the insulated wires adjacent to each other in the slot of the stator is preliminarily reduced.

(14) The method of producing the stator for the rotating electrical machine described in the item (13), wherein a coating of the insulated wire is compressed in a thickness direction and a thickness thereof is reduced.

(15) A rotating electrical machine, comprising the insulated wire described in any one of the items (1) to (11).

ADVANTAGEOUS EFFECTS OF INVENTION

According to the present invention, there can provided: an insulated wire, in which durability based on partial discharge deterioration is maintained at a high level, and in which conductor occupancy in a slot is high; a method of producing the insulated wire; a method of producing a stator for a rotating electrical machine; and the rotating electrical machine. Further, the present invention can provide: the method of producing the insulated wire, in which such an excellent insulated wire can be produced by a simple and inexpensive producing process without requiring a complicated producing process; and the method of producing the stator for the rotating electrical machine.

Other and further features and advantages of the invention will appear more fully from the following description, appropriately referring to the accompanying drawings.

BRIEF DESCRIPTION OF DRAWINGS

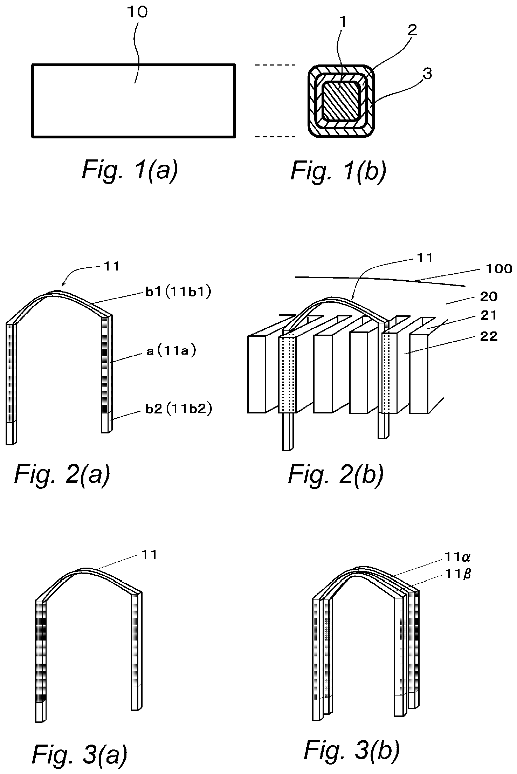

{Figs. 1(a) and 1(b)}
Fig. 1 (a) is a schematic top view of an insulated wire, and Fig. 1 (b) is a schematic cross-sectional view of the insulated wire.
{Figs. 2(a) and 2(b)}
Fig. 2(a) is a schematic appearance perspective view showing a shape of a coil (insulated wire divided segments) to be used in the present invention, and Fig. 2(b) is an enlarged perspective view schematically showing a state in which the coil is housed into a slot of a stator core.
{Figs. 3(a) and 3(b)}
Fig. 3(a) is a schematic appearance perspective view showing a shape of a coil to be used in the present invention, and Fig. 3(b) is a schematic appearance perspective view in which 2 sets of coils are set.
{Figs. 4}
Fig. 4 is a perspective view showing a step of inserting coils in which 2 sets are set into slots of a stator core, according to the present invention.
{Figs. 5}
Fig. 5 is an overall perspective view of a stator.
{Figs. 6(a) and 6(b)}
Fig. 6(a) is a schematic partial perspective view of a stator, and Fig. 6(b) is a schematic side view of the stator.
{Figs. 7(a1), 7(a2), 7(a3), 7(b1), 7(b2), 7(b3), and 7(c3)}
Fig. 7(a1), Fig. 7(a2) and Fig. 7(a3), and Fig. 7(b1), Fig. 7(b2), and Fig. 7(b3), and Fig. 7(c3) each are a schematic process diagram, in which a thickness of a coating layer composed of a bubble layer is reduced in a length direction, by a presswork machine, including a schematic top view and a schematic cross-sectional view of an insulated wire, in which a rectangular conductor is used.
{Figs. 8(a1), 8(a2), 8(a3), 8(b1), 8(b2), 8(b3), and 8(c3)}
Fig. 8(a1), Fig. 8(a2) and Fig. 8(a3), and Fig. 8(b1), Fig. 8(b2), and Fig. 8(b3), and Fig. 8(c3) each are a schematic process diagram, in which a thickness of a coating layer composed of a bubble layer and a layer having no bubble is reduced in a length direction, by a presswork machine, including a schematic top view and a schematic cross-sectional view of an insulated wire, in which a rectangular conductor is used.

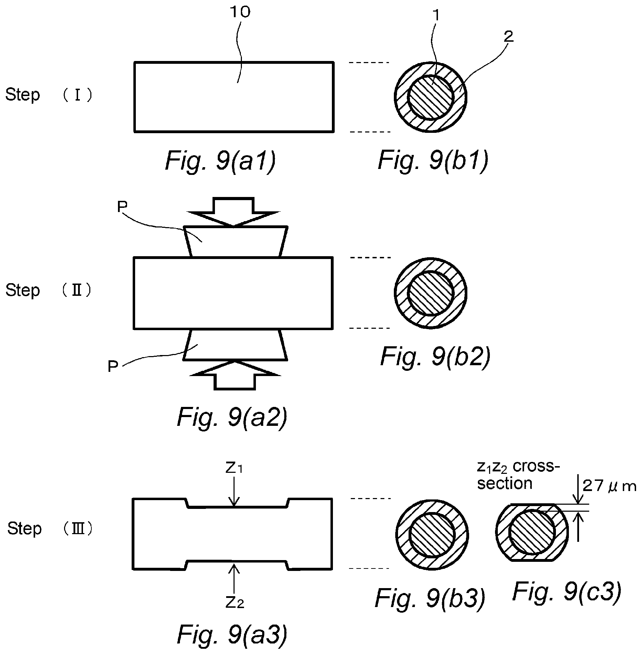

{Figs. 9(a1), 9(a2), 9(a3), 9(b1), 9(b2), 9(b3), and 9(c3)}

Fig. 9(a1), Fig. 9(a2) and Fig. 9(a3), and Fig. 9(b1), Fig. 9(b2), and Fig. 9(b3), and Fig. 9(c3) each are a schematic process diagram, in which a thickness of a coating layer composed of a bubble layer is reduced in a length direction, by a presswork machine, including a schematic top view and a schematic cross-sectional view of an insulated wire, in which a circular conductor is used.

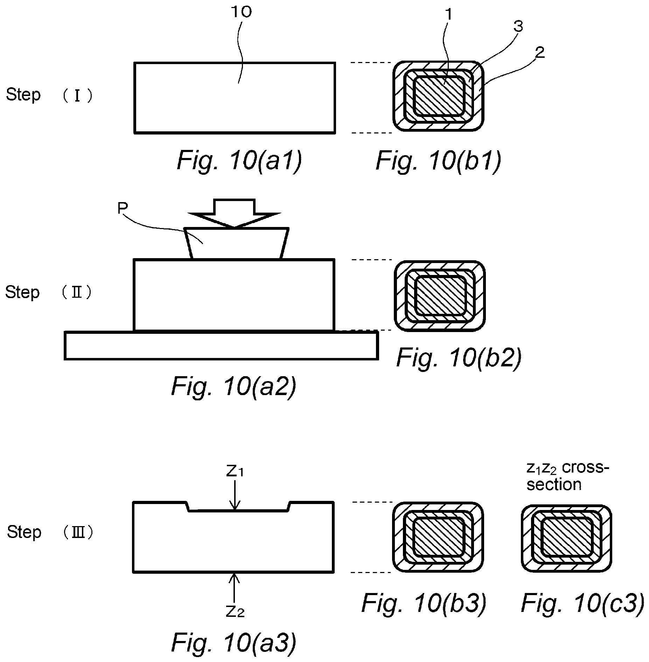

{Figs. 10(a1), 10(a2), 10(a3), 10(b1), 10(b2), 10(b3), and 10(c3)}

Fig. 10(a1), Fig. 10(a2) and Fig. 10(a3), and Fig. 10(b1), Fig. 10(b2), and Fig. 10(b3), and Fig. 10(c3) each are a schematic process diagram, in which a thickness of a coating layer of one side of long sides of a bubble layer is reduced in a length direction, by a presswork machine, including a schematic top view and a schematic cross-sectional view of an insulated wire, in which a rectangular conductor is used.

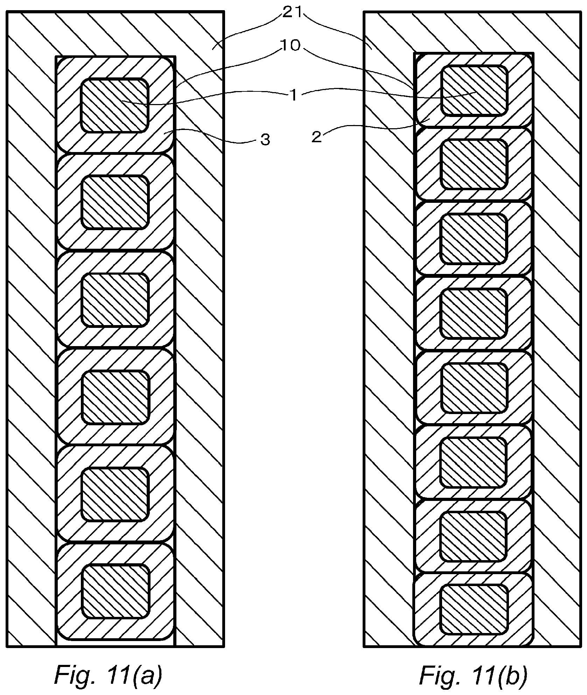

{Figs. 11 (a) and 11(b)}

Fig. 11 (a) and Fig. 11 (b) each are a schematic cross-sectional view showing a housing state of a plurality of insulated wires housed in a slot of a stator core.

MODE FOR CARRYING OUT THE INVENTION

«Insulated wire»

An insulated wire of the present invention can be preferably used in a rotating electrical machine, for example, for a motor for general industries and an automobile.

In the insulated wire of the present invention, a part in which a thickness is small in a length direction or a circumferential direction in an identical coating layer is arranged in a coating layer with which a conductor is coated.

Further, the insulated wire of the present invention has at least one layer of a bubble layer in the coating layer, particularly in order to suppress partial discharge deterioration against generation of corona discharge, to improve durability.

As described above, in such an insulated wire, the part in which the thickness is made small in the length direction or the circumferential direction in the identical coating layer, is arranged.

Herein, the bubble layer is a layer having bubbles (cells), and relative permittivity of the coating resin is reduced by presence of the bubbles.

In the insulated wire to be used as a coil in the stator of the rotating electrical machine, no excessive countermeasure against corona discharge is required in a part other than the part in which the insulated wire is placed in an environment in which corona discharge is apt to occur, in the length direction or the circumferential direction, and thus the thickness of the coating layer can be reduced.

In the present invention, the durability based on partial discharge deterioration is maintained at a high level, and conductor occupancy in the slot is increased, by reducing the thickness of the coating layer in the part other than the part in which the insulated wire is placed in the environment in which the corona discharge of the insulated wire is apt to occur.

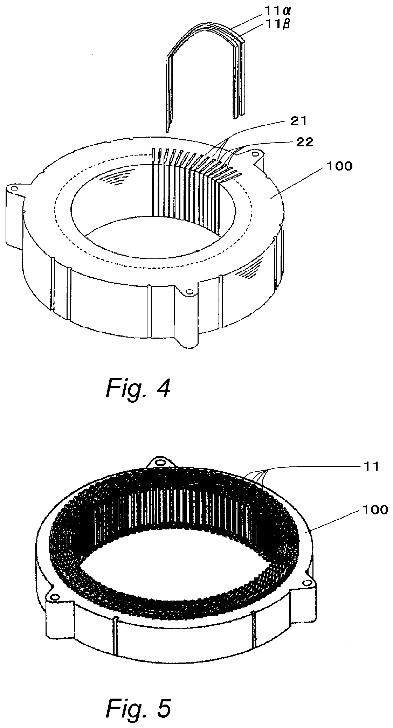

For example, in the case of the rotating electrical machine, such as the automobile, as shown in Fig. 5, a processed insulated wire (coil) 11 is assembled into a stator 100.

In this stator 100, the coil (insulated wire divided segments) 11 as shown in Fig. 2(a) or Fig. 3(a) is applied as a minimum basic unit, and ordinarily, a set of 2 sets (11α, 11β) is applied as a basic unit, as shown in Fig. 3(b), and housed in a slot 22 in a manner shown in Fig. 4. Herein, Fig. 2(b) schematically shows a state in which the coil (insulated wire divided segments) 11 being the minimum basic unit is housed therein. The coil (insulated wire divided segments) 11 is assembled into a teeth 21, and a slot 22 different from the slot 22, each of which is provided in the stator core 20 of the stator 100. On this occasion, as shown in Fig. 2(a), the coil (insulated wire divided segments) 11 is constituted of a slot housing portion a (11a) to be housed in the slot 22, and a coil end portion that is not housed therein, in detail, a turn portion b1 (11b1) having U-shape or the like, and open end portions b2 (11b2) being two end portions. In addition, the slot housing portion a (11a) is ordinarily linear.

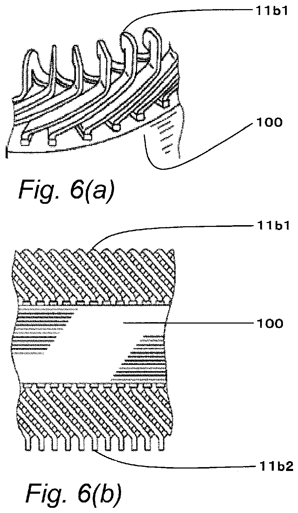

In a manner shown in Fig. 4, the coil (insulated wire divided segment) 11 is applied as the minimum basic unit, and ordinarily a set of 2 sets (11α, 11β) is applied as the basic unit, as shown in Fig. 3(b), and the coils are assembled into the stator. Then, the turn portion b1 (11 b1) of the coil (insulated wire divided segment) 11 and the open end portions b2 (11 b2) of the coil (insulated wire divided segment) 11 are protruded from the slot 22 and wired. The turn portion b1 (11 b1) of the coil (insulated wire divided segment) 11 is aligned in a state as shown in Fig. 6(a). On the other hand, the open end portions b2 (11 b2) of the coil (insulated wire divided segment) 11 are bent, and two coil end portions in the open end portions are connected to other coil open end portions, and wired.

Fig. 6(b) is a side view of the stator 100 shown in Fig. 5, into which the insulated wire (coil) 11 is assembled, and the coil end portions (11 b1, 11 b2) of the insulated wire (coil) 11 are protruded above and below the stator 100.

In the insulated wire in the stator 100, the corona discharge is mostly apt to generate in the coil end portions (11 b1, 11 b2).

Thus, in the coil end portions (11 b1, 11 b2), a countermeasure against this corona discharge is required. On the other hand, in the slot housing portion (11 a), corona discharge is not generated as in the coil end portions (11 b1, 11 b2), and thus the conductor occupancy in the slot can be improved, by reducing the thickness of the coating layer subjected to the countermeasure against corona discharge than the thickness of the coil end portions (11 b1, 11 b2).

Fig. 11 (a) and Fig. 11 (b) each are a schematic cross-sectional view (cross-sectional view in which the stator is sliced in rounds) showing a housing state of a plurality of insulated wires, in which the insulated wire prepared by using the rectangular conductor is housed in the slot of the stator core. Many insulated wires can be housed, by reducing the thickness of the coating layer with which the adjacent insulated wires are brought into contact with each other. Herein, Fig. 11 (a) shows a conventional insulated wire, and Fig. 11 (b) shows the insulated wire of the present invention.

The insulated wire of the present invention is the insulated wire in which at least one layer of the insulating material is coated around the conductor.

Herein, in this specification, the coating is used in the same meaning with the covering, and the coating layer is used in the same meaning with the covering layer.

Hereinafter, the components are described from a conductor.

<Conductor>

As for the conductor to be used in the present invention, a material thereof is not limited, as long as it has electrical conductivity. Examples thereof include copper, a copper alloy, aluminum, an aluminum alloy, and the like. However, the present invention is not limited to these materials. In the case where the conductor is copper, for example, when copper is melted by heat for welding, from the viewpoint of preventing occurrence of voids at the welded portion due to contained oxygen, preferably the copper has its content of 99.96% or more and the copper is preferably a low-oxygen copper having an oxygen content of preferably 30 ppm or less, more preferably 20 ppm or less, or an oxygen-free copper. In the case where the conductor is aluminum, from the viewpoint of a required mechanical strength, various aluminum alloys can be used. For example, for such a use as a rotating electrical machine, it is preferred to use a 99.00% or more-grade pure aluminum by which a high current value can be obtained.

A cross-sectional shape of the conductor is determined according to an application, and thus any shapes, such as a circular shape (round), a rectangular shape (rectangular) or a hexagonal shape, may be utilized. For example, for the application, such as the rotating electrical machine, a rectangular conductor is preferable in view of a capability of keeping high conductor occupancy in the slot of the stator core.

A size of the conductor is determined according to the application, and is not particularly designated. In the case of a round conductor, the size is preferably 0.3 to 3.0 mm, and more preferably 0.4 to 2.7 mm in terms of a diameter. In the case of a rectangular conductor, a width (long side) as a length of one side is preferably 1.0 to 5.0 mm, and more preferably 1.4 to 4.0 mm, and a thickness (short side) is preferably 0.4 to 3.0 mm, and more preferably 0.5 to 2.5 mm. However, a range of the conductor size in which advantageous effects of the present invention are obtained is not limited thereto.

Moreover, in the case of the rectangular conductor, although the shape is also different according to the application, a cross-sectional rectangular (quadrate) is more general than a cross-sectional square. Moreover, in the case of the rectangular conductor, when the application is the rotating electrical machine, for chamfering (curvature radius r) in four corners in a conductor cross section, r is preferably smaller from a viewpoint of keeping the high conductor occupancy in the slot of the stator core. From a viewpoint of suppressing a phenomenon of partial discharge by concentration of an electric field on the four corners, r is preferably larger. Thus, the curvature radius r is preferably 0.6 mm or less, and more preferably 0.2 to 0.4 mm. However, the range in which the advantageous effects of the present invention are obtained is not limited thereto.

<Coating layer>

In the present invention, the insulated wire has at least one layer of the coating layer composed of the insulating material. For example, Figs. 1(a) and 1(b) each show an insulated wire having a rectangular conductor 1 coated with two layers of coating layers [a coating layer (a bubble layer) 2 and a coating layer (a layer having no bubble) 3]. Herein, Fig. 1(a) is a top view of an insulated wire 10, and Fig. 1(b) is a cross-sectional view thereof.

Specific examples of a resin that can be used for an insulation covering resin in the present invention include: a thermoplastic resin, such as polyimide, polyamideimide, polyesterimide, polyetherimide, polyamide, polyurethane, polyhydantoin, polyimide hydantoin-modified polyester, polyester, polybenzimidazole, a melamine resin, formal, polyvinylformal, an epoxy resin, a phenolic resin and a urea resin; and in view of heat resistance and flexibility, a resin, such as polyimide, polyamideimide, polyesterimide, polyetherimide, polyester, and polybenzimidazole is preferable; and polyimide, polyamideimide, polyesterimide, polyetherimide or polyester is more preferable. One kind of these thermoplastic resins may be used alone, or two or more kinds may be combined and used.

In addition to the resins listed above, any resin obviously can be used if the resin is superior to those resins in terms of performance.

The coating layer of the thermosetting resin can be formed by a method similar to the method of baking of an enameled wire.

That is, the coating layer of the thermosetting resin can be provided, by forming a varnish of the thermosetting resin with an organic solvent into a resin varnish, applying this resin varnish to the conductor, and baking the conductor on which the varnish is applied in a baking furnace by a usual method. Although specific baking conditions are influenced by a shape of the furnace to be used and the like, if a natural convection-type vertical furnace of about 5m is applied to, baking can be achieved by setting a passing time to 10 to 90 seconds at 400 to 500°C.

The organic solvent to be used for forming the varnish of the resin varnish is not particularly restricted, as long as the solvent does not adversely affect a reaction of the thermosetting resin. Examples thereof include: an amide-based solvent, such as N-methyl-2-pyrrolidone (NMP), N,N-dimethylacetamide (DMAC), dimethyl sulfoxide, and N,N-dimethylformamide; a urea-based solvent, such as N,N-dimethylethyleneurea, N,N-dimethylpropyleneurea, and tetramethylurea; a lactone-based solvent, such as γ-butyrolactone and γ-caprolactone; a carbonate-based solvent, such as propylene carbonate; a ketone-based solvent, such as methyl ethyl ketone, methyl isobutyl ketone, and cyclohexanone; an ester-based solvent, such as ethyl acetate, n-butyl acetate, butyl cellosolve acetate, butyl carbitol acetate, ethyl cellosolve acetate, and ethyl carbitol acetate; a glyme-based solvent, such as diglyme, triglyme, and tetraglyme; a hydrocarbon-based solvent, such as toluene, xylene, and cyclohexane; and a sulfone-based solvent, such as sulfolane. A boiling point of the organic solvent is preferably 160°C to 250°C, and more preferably 165°C to 210°C.

Among these organic solvents, an amide-based solvent or a urea-based solvent is preferable in view of high solubility, high reaction acceleration performance and the like, and because the organic solvent does not have any hydrogen atom that is apt to inhibit a crosslinking reaction by heat, N-methyl-2-pyrrolidone, N,N-dimethylacetamide, N,N-dimethylethyleneurea, N,N-dimethylpropyleneurea or tetramethylurea is more preferable, and N-methyl-2-pyrrolidone is particularly preferable.

In addition, the resin varnish may contain, in addition to the resin, when necessary, any of various additives, such as an antioxidant, an antistatic agent, a ultraviolet radiation inhibitor, a light stabilizer, a fluorescent whitening agent, a pigment, a dye, a compatibilizer, a lubricant, a reinforcing agent, a flame retardant, a crosslinking agent, a crosslinking coagent, a plasticizer, a thickening agent, a viscosity reducer, and an elastomer.

In the present invention, the insulated wire may have two or more layers of the coating layers. In addition, in the present invention, a case where the completely same resin varnish is applied a plurality of times, and baking the resultant material, to merely adjust a thickness of the layer, is counted as one layer, namely regarded to be identical, and a case where a kind or an amount of additives in the resin varnish is different even in the same resin, is counted as another layer.

Further, examples of the thermoplastic resin that can be used for an insulation covering resin in the present invention include: general-purpose engineering plastics, including polyamide (PA) (nylon), polyacetal (POM), polycarbonate (PC), polyphenylene ether (including modified polyphenylene ether), polybutylene terephthalate (PBT), polyethylene terephthalate (PET), polybutylene naphthalate (PBN), polyethylene naphthalate (PEN), and ultra-high molecular weight polyethylene; and also super engineering plastics, including polysulfone (PSF) or polysulfone (PSU), polyethersulfone (PES), polyphenylsulfone (PPSU), polyetherimide (PEI), polyphenylene sulfide (PPS), polyarylate (U polymer), polyetherketone (PEK), polyaryletherketone (PAEK) (including modified PEEK), tetrafluoroethylene/ethylene copolymers (ETFE), polyether ether ketone (PEEK), tetrafluoroethylene/perfluoroalkyl vinyl ether copolymers (PFA) (FEP), polytetrafluoroethylene (PTFE), thermoplastic polyimide (TPI), polyamideimide (PAI); and further polymer alloys, containing as a base resin polyethylene terephthalate (PET) or polyethylene naphthalate (PEN); and polymer alloys containing the above-described engineering plastics, including acrylonitrile/butadiene/styrene copolymers (ABS) with polycarbonate, nylon 6,6/aromatic polyamide resins, polyphenylene ether/nylon 6,6, polyphenylene ether/polystyrene, and polybutylene terephthalate/polycarbonate. One kind of these thermoplastic resins may be used alone, or two or more kinds may be combined and used.

In addition, a resin of use is not limited by names of the resins indicated above, and in addition to the resins listed above, any resin obviously can be used if the resin is superior to those resins in terms of performance.

The coating layer of the thermoplastic resin may be provided by forming a resin varnish to apply the resultant varnish to the conductor, or further applying baking after application, in the same manner as a coating layer of a thermosetting resin as mentioned later. An extrusion-covering resin layer is preferably provided, by extruding the thermoplastic resin.

As the thermosetting resin or the thermoplastic resin, the coating layer of the present invention preferably contains the resin selected from polyester, polyesterimide, polyimide (PI), polyamideimide (PAI), polyphenylene sulfide (PPS) and polyether ether ketone (PEEK).

In addition, in these resins, a modified resin is also preferably used.

Among these, the resin in the bubble layer is preferably a thermosetting resin selected from polyester, polyesterimide, polyimide (PI) and polyamideimide (PAI), or a thermoplastic resin selected from polyethylene naphthalate (PEN), polyethylene terephthalate (PET), polyphenylene sulfide (PPS) and polyether ether ketone (PEEK).

When the coating layer is composed of the bubble layer and at least one layer having no bubble, the resin in the layer having no bubble preferably contains a thermoplastic resin selected from polyphenylene sulfide (PPS) and polyether ether ketone (PEEK). In particular, as polyether ether ketone, modified polyether ether ketone is also preferable.

Specific examples of a commercially available product of polyphenylene sulfide (PPS) include: FZ-2100 (trade name, manufactured by DIC Corporation); specific examples of a commercially available product of polycarbonate (PC) include: Panlite LV-2250Y (trade name, manufactured by Teijin Limited); specific examples of a commercially available product of polyethylene terephthalate (PET) include: TR-8550T (trade name, manufactured by Teijin Limited); specific examples of a commercially available product of polybutylene terephthalate (PBT) include: Toraycon 1401X31 (trade name, manufactured by Toray Industries, Inc.); specific examples of a commercially available product of polyethylene naphthalate (PEN) include: Teonex TN8065S (trade name, manufactured by Teijin Limited); specific examples of a commercially available product of polyether ether ketone (PEEK) include: KetaSpire KT-820 (trade name, manufactured by Solvay Specialty Polymers Japan K.K.), and PEEK 450G (trade name, manufactured by Victrex Japan Co. Ltd.); specific examples of a commercially available product of polyethersulfone (PES) include: Sumikaexcel PES (trade name, manufactured by Sumitomo Chemical Co., Ltd.); specific examples of a commercially available product of polyetherimide (PEI) include:

ULTEM 1010 (trade name, manufactured by Sabic Innovative Plastics Holding BV); specific examples of a commercially available product of polyimide (PI) include: AURUM PL450C (trade name, manufactured by Mitsui Chemicals, Inc.); specific examples of a commercially available product of polyamideimide (PAI) include: HI406 (trade name, manufactured by Hitachi Chemical Company, Ltd.); and specific examples of a commercially available product of polyesterimide include EH402 and EH460 (trade names, manufactured by Dainichiseika Color & Chemicals Mfg. Co., Ltd.).

A total thickness of the coating layer is preferably 3 to 200 $\mu$m, more preferably 10 to 150 $\mu$m, and further preferably 20 to 100 $\mu$m.

A part in which the thickness is small has, although a level depends on a means for reducing the thickness, preferably a thickness of 40 to 95%, more preferably a thickness of 50 to 95%, and further preferably a thickness of 50 to 90%, of the thickness before the thickness is reduced.

(Bubble layer)

The bubbles to be contained in the bubble layer may be closed bubbles or open bubbles or both of these bubbles. Herein, the closed bubbles mean bubbles in which no holes, namely no communicating opening portions with adjacent bubbles can be confirmed on inner walls of the bubbles, when a cross section of the extrusion-covering resin layer cut at an arbitrary cross section is observed by means of a microscope; and the open bubbles mean bubbles in which the holes can be confirmed on the inner walls of the bubbles when the cross section is observed in a similar manner. With regard to the bubbles, the layer preferably includes the closed bubbles: in view of an increase in an internal pressure even on deformation by momentary collapse in a longitudinal direction, namely a thickness direction, while wear properties and mechanical properties of the coating layer, preferably the extrusion-covering resin layer are maintained, and when the pressure is released, easily returning to an original state; or in view of causing no infiltration of the solvent and the like into the bubbles even when the layer is dipped into the solvent and the like to cause no bury of a bubble portion (a cellular part), and a capability of suppressing any rise of the relative permittivity.

As to whether or not the resin of the insulated wire is foamed, for example, if any cellular bubbles can be confirmed, when a photograph of a cross section is observed, in the cross section cut in any of the thickness direction, a longitudinal direction or a crosswise direction in a sample area, by means of a scanning electron microscope or an optical microscope, foaming of the resin can be judged, or can be indirectly confirmed by lowering of the bulk density.

The size and the shape of the bubbles contained in the bubble layer are not particularly limited. The shape is preferably spherical. Averages of the diameter of one bubble is preferably 10 $\mu$m or less, more preferably 5 $\mu$m or less, and further preferably 2 $\mu$m or less, in terms of a radius in sphere equivalent of a bubble volume.

A diameter of the bubbles is expressed using a value obtained by observing a cross section of the bubble layer of the coating layer by means of a scanning electron microscope (SEM), measuring diameters of 20 pieces of arbitrarily selected bubbles by a diameter measuring mode using image-analysis/measurement software (WinROOF, manufactured by Mitani Corporation), and averaging the diameters, and calculating an average value. In addition, when a shape of the bubbles is not circular, the longest part is taken as the diameter.

When the bubble layer is formed, the foaming ratio is preferably 1.2 to 5.0, more preferably 1.2 to 2.0, and further preferably 1.3 to 1.8.

As this foaming ratio is larger, the relative permittivity is lowered.

Further, the bulk density of the resin in the foamed part is lowered. The foaming ratio is calculated from a relationship of this change in the bulk density.

Specifically, the foaming ratio can be determined by the following formula.

$$\text{Foaming ratio} = \text{(Bulk density of a resin before being foamed)/(Bulk density of the resin after being foamed)}$$

(Measurement of a bulk density)

Herein, the bulk density for determining the foaming ratio can be measured as described below.

The bulk density is determined in accordance with Method A (water displacement method) in "Plastics-Methods of determining the density and relative density of non-cellular plastics" in JIS K 7112 (1999).

Specifically, for example, a density-measurement kit attached to Electronic Balance SX64 manufactured by Mettler Toledo International Inc. is used, and methanol is used as an immersion fluid. A U-shaped part being the coil end portion that is the foamed part of the extrusion-covering resin in the insulated wire, and the slot housing portion thereof that is not foamed are peeled off, respectively, and the resultant sample is taken as each test specimen, and the density of each test specimen is calculated from the following calculation formula.

$$\text{Density of test specimen } \rho_{S,t} = (m_{S,A} \times \rho_{IL})/(m_{S,A} - m_{s,IL})$$

Herein, $m_{S,A}$ is mass (g) of the test specimen measured in the air, $m_{s,IL}$ is mass (g) of the test specimen measured in the immersion fluid, and $\rho_{IL}$ is density (g/cm$^3$) of the immersion fluid.

(Measurement of relative permittivity)

On the other hand, the relative permittivity to be specified in the present invention can be determined, as described below, by measuring electrostatic capacity of an insulation layer; and calculating the relative permittivity from the thus-obtained electrostatic capacity.

Specifically, the relative permittivity is calculated from a relationship between a length of an electrode and a thickness of the insulation coating, by vapor-depositing a metal electrode on a whole circumference of a coating on an outermost surface of the insulated wire, and measuring the electrostatic capacity between the conductor and the metal electrode. Herein, the electrostatic capacity of the insulation layer is measured by using a commercially available LCR meter, for example, LCR HiTester (model 3532-50, manufactured by Hioki E.E. Corporation) at 25°C and 100 Hz.

In the insulated wire in which the shape of the conductor is rectangular, partial relative permittivity can also be measured, if the insulation coating in a plane is locally peeled off, and the metal electrode is vapor-deposited on the plane in a certain one plane of flat planes (insulation coatings) of four planes in the circumferential direction.

In the insulated wire of the present invention, when the relative permittivity of the resin to be used for a bubble layer before the resin is foamed is taken as 100, the relative permittivity of the bubble layer is preferably 90 or less, more preferably 80 or less, and further preferably 75 or less. In addition, a lower limit of the relative permittivity in the above-described relationship of the bubble layer is practically 20 or more.

Thus, a relative permittivity lowering ratio [(relative permittivity before being foamed - relative permittivity after being foamed) x 100 / relative permittivity before being foamed] by lowering of the bulk density by foaming the resin is preferably 10% or more, more preferably 20% or more, and further preferably 25% or more. Moreover, an upper limit of the relative permittivity lowering ratio is practically 80% or less.

<Formation of a bubble layer>

When the coating layer is composed of the above-described thermosetting resin, the bubble layer is typically formed by: a method in which a bubble-forming agent being an organic solvent for forming bubbles (cells) is added into resin varnish or resin (hereinafter, collectedly refers to 'the resin varnish') with which a coating layer is formed, the resin varnish is applied onto a conductor, and then the coated resin varnish is heated to vaporize the bubble-forming agent, and to form the bubbles in the resin varnish; or a method in which gas or liquid is penetrated into resin in a coating layer, and then the resultant resin is heated to form bubbles. In addition thereto, there is a method in which a foaming-nucleating agent is contained in an insulation coating.

(Method by a bubble-forming agent)

It is preferable to form the bubbles by adding the bubble-forming agent to the resin varnish with which the bubble layer is formed, applying the resultant material to the conductor to cover the conductor with the resin varnish, and heating the resultant material. In addition, the resin varnish may be applied onto the conductor directly or by interposing another resin layer therebetween.

In addition, the organic solvent as mentioned above to be used for forming the resin varnish is ordinarily used, in the resin varnish, separately from the bubble-forming agent.

As the bubble-forming agent, an organic solvent having a boiling point of 180°C to 300°C is preferable, and an organic solvent having a boiling point of 210°C to 260°C is further preferable.

As a high-boiling point solvent having the above boiling points, specifically, such a solvent can be used as: diethylene glycol dimethyl ether, triethylene glycol dimethyl ether, diethylene glycol dibutyl ether, tetraethylene glycol dimethyl ether, and tetraethylene glycol monomethyl ether. In view of a small fluctuation of a bubble diameter, triethylene glycol dimethyl ether is more preferable. In addition thereto, such a solvent can be used as: dipropylene glycol dimethyl ether, diethylene glycol ethyl methyl ether, dipropylene glycol monomethyl ether, diethylene glycol diethyl ether, diethylene glycol monomethyl ether, diethylene glycol butyl methyl ether, tripropylene glycol dimethyl ether, diethylene glycol monobutyl ether, ethylene glycol monophenyl ether, triethylene glycol monomethyl ether, triethylene glycol butyl methyl ether, polyethylene glycol dimethyl ether, polyethylene glycol monomethyl ether, and propylene glycol monomethyl ether.

One kind of the high-boiling point solvent in the bubble-forming agent may be used alone, but in view of obtaining an effect in which foam is generated in a long temperature range, at least two kinds are preferably combined and used. Specific examples of a preferable combination of at least two kinds of the high-boiling point solvents include: a combination of tetraethylene glycol dimethyl ether and diethylene glycol dibutyl ether, a combination of diethylene glycol dibutyl ether and triethylene glycol dimethyl ether, a combination of triethylene glycol monomethyl ether and tetraethylene glycol dimethyl ether, and a combination of triethylene glycol butyl methyl ether and tetraethylene glycol dimethyl ether; and more preferably a combination of diethylene glycol dibutyl ether and triethylene glycol dimethyl ether, and a combination of triethylene glycol monomethyl ether and tetraethylene glycol dimethyl ether.

The high-boiling point solvent being the bubble-forming agent preferably has a boiling point higher than the boiling point of the solvent for forming the resin varnish, and when one kind of the high-boiling point solvent being the bubble-forming agent is used alone, the high-boiling point solvent being the bubble-forming agent preferably has a boiling point higher by 10°C or more than the solvent for forming the resin varnish. In addition, when one kind of the high-boiling point solvent being the bubble-forming agent is used alone, the high-boiling point solvent has both roles of a bubble-nucleating agent and a foaming agent. On the other hand, when two or more kinds of the high-boiling point solvents for the bubble-forming agent are used, a high-boiling point solvent having the highest boiling point acts as the foaming agent, and a high-boiling point solvent having an intermediate boiling point for forming the cells acts as the bubble-nucleating agent.

In heating for forming the bubbles with the resin varnish containing the bubble-forming agent, the bubbles are formed thereon by baking the resin varnish covered on the conductor in the baking furnace.

Although specific baking conditions are influenced by a shape of the furnace to be used and the like, if a natural convection-type vertical furnace of about 5 m is applied, the resin varnish can be formed into the bubble layer by baking the varnish at a furnace temperature of 500 to 520°C. Moreover, as a time of passing through the furnace, 10 to 90 seconds are usual.

(Foaming by a gas)

When the coating layer is composed of the above-described thermoplastic resin, as a method of forming the bubble layer, the method is applied in which gas is penetrated into the insulation coating of the insulated wire after the insulated wire is produced, to foam the insulation coating with the penetrated gas as a starting point.

A gas to be used is preferably an inert gas, and specific examples thereof include: argon, hydrogen, methane, chlorofluorohydrocarbon (Freon), carbon dioxide gas, helium, oxygen, and nitrogen. Among these, carbon dioxide gas is preferable, in which gas penetrating force into the resin to be used in the usual insulated wire is high, and in which the resin can be foamed at a high foaming ratio.

In addition, the gas to be used may be a liquid state under a high pressure, and may be in this liquid state, and these are collectively referred to as the inert gas herein. In a similar manner, "in the inert gas atmosphere" includes "in the liquid of the inert gas."

With regard to foaming the resin by the inert gas, the resin is preferably foamed according to the order of steps (1) to (2) as described below.

Foaming method

(1) A step of holding the insulated wire in a pressurized inert gas atmosphere, to penetrate the inert gas thereinto;
(2) A step of heating the insulated wire in which the inert gas is penetrated into the resin under a normal pressure, to foam the resin.

With regard to pressurization by a high-pressure gas in the step (1), although a level depends on the resin for using in the insulated wire, 1 to 20 MPa is preferable, 1 to 15 MPa is more preferable, and 1 to 10 MPa is further preferable. Moreover, a holding time in the inert gas atmosphere is preferably 6 hours or more, more preferably 12 hours or more, and further preferably 24 hours or more. A temperature under the inert gas atmosphere is preferably 40°C or lower, more preferably 30°C or lower, and further preferably 20°C or lower.

With regard to a heating temperature for foaming the resin by heating the resin under the normal pressure in the step (2), although a level depends on the resin to be used in the coating layer, preferably in the extrusion-covering resin layer, if the temperature is higher than a glass transition temperature, the resin is apt to be deformed, and thus such a case is preferable. The heating temperature is higher preferably by 5 to 200°C, more preferably by 30 to 180°C, and further preferably by 50 to 150°C, than the glass transition temperature of the resin. A heating time, although a level depends on the heating temperature, is preferably 3 to 120 seconds.

In the present invention, when the coating layer on the conductor includes only the thermosetting resin (enameled layer), as described in JP-A-2011-238384, as a method of forming the bubbles, the method is also preferable in which a gas is penetrated into an insulated wire constituted by forming an insulation coating by baking a mixture in which a thermoplastic resin is mixed in an enamel paint thereon, to foam the resin with the penetrated gas.

As the thermosetting resin to be used in such a method, any of the thermosetting resins can be used within the range in which the spirit of the present invention is not adversely affected. For example, such a resin can be used as: polyimide, polyamideimide, polyesterimide, polyetherimide, polyamide, polyurethane, polyhydantoin, polyimide hydantoin-modified polyester, polyester, polybenzimidazole, a melamine resin, formal, polyvinylformal, an epoxy resin, a phenolic resin, and a urea resin. Among these, such a resin as: polyimide, polyamideimide, polyesterimide, polyetherimide, polyester, and polybenzimidazole is preferable, in view of the heat resistance and flexibility. Moreover, one kind of these may be used alone, or two or more kinds may be combined and used.

As the thermoplastic resin that can be used in this application, if the resin can be dissolved in the solvent, any resin may be applied thereto, and an amorphous thermoplastic resin is apt to dissolve therein and has good operability, and thus is preferable. In the present invention, the amorphous thermoplastic resin means, for example, an acrylic resin, a norbornene resin, a cycloolefin-based resin, polystyrene, polycarbonate, polyethersulfone, polyetherimide, polyphenyl sulfone, polysulfone, polyarylate, and thermoplastic polyimide. Among the amorphous thermoplastic resins, polyetherimide, polycarbonate, polyethersulfone, polyphenyl sulfone, polysulfone, polyarylate or the like is particularly preferable. The resin is made to apt to dissolve in the solvent by using the amorphous thermoplastic resin. Moreover, these resins can be finely dispersed into a network structure of the thermosetting resin, and fine pores can be formed. Moreover, one kind of these may be used alone, or two or more kinds may be combined and used.

Also when the thermoplastic resin is not dissolved in the solvent, the bubbles may be incorporated thereinto by using the insulated wire formed by applying a paint composed by dispersing a powder thermoplastic resin into the enamel paint and baking the resultant material. The powder may have any form, such as a spherical form or indefinite form within the range in which outer appearance of the coating is not adversely affected. A spherical form is more preferable in view of high electrical properties.

When a mass of a resin component without containing the solvent in the thermosetting resin is taken as A, and a mass of the thermoplastic resin is taken as B, a ratio A/B is preferably from 10/90 to 90/10, a ratio A/B is more preferably from 30/70 to 70/30, and a ratio A/B is particularly preferably from 40/60 to 60/40. If an amount of the component of the thermosetting resin is high, the insulated wire tends to be excellent in the heat resistance, but the foaming ratio is hard to increase, and an amount of lowering of the relative permittivity tends to be low. Moreover, if the amount of the component of the thermoplastic resin is high, the foaming ratio is easily increased, and the amount of lowering of the relative permittivity increases, but the insulated wire tends to be lowered in the heat resistance. Thus a mixing ratio according to need should be selected.

In addition, the layer of the thermoplastic resin may be provided on the coating layer composed of the thermosetting resin.

(Foaming by a foaming-nucleating agent)

Moreover, as another aspect of the present invention, there is a method, in which a foaming-nucleating agent is incorporated into an insulation coating in a process of producing the insulated wire. Specifically, lowering of the relative permittivity can be realized, by foaming a predetermined place, by incorporating the foaming-nucleating agent that is decomposed by ultraviolet radiation, an electron beam, heat or the like to generate a gas into an insulation coating resin, and then by applying ultraviolet radiation, an electron beam, heat or the like afterward only to a part in which lowering of the relative permittivity of the insulation coating is desired.

In the present invention, the coating layer has at least one layer of the bubble layer, and the coating layer may be composed of the bubble layer and the coating layer having no bubble.

For example, as indicated in JP-B-4177295, as a configuration of an insulation coating, a thermosetting resin (so-called enameled layer) capable of maintaining high adhesion with a conductor or high heat resistance of a coating is arranged on a periphery of the conductor, and arranging a bubble layer on a periphery of the layer having no bubble is also preferable. Moreover, it is also preferable to arrange a coating layer such as an extrusion-covering resin layer, on the bubble layer.

<<Insulated wire having part in which thickness is small in length direction or circumferential direction in identical coating layer, and producing method of the same>>

The insulated wire of the present invention has the part in which the thickness is small in the length direction or the circumferential direction in the identical coating layer.

When the insulated wire has a plurality of coating layers, the layer having the part in which the thickness is small in the identical layer, is allowed to be any layer.

For example, a layer in contact with the conductor, an outermost layer or an internal layer is allowed. Moreover, it is also preferable that the thickness in all coating layers in an identical place is small.

Although a level depends on a means for reducing the thickness as described above, a part in which the thickness is small, has preferably a thickness of 40 to 95%, more preferably a thickness of 50 to 95%, and further preferably a thickness of 50 to 90%, of the thickness before the thickness is reduced.

A degree of increasing the conductor occupancy in the stator is determined, depending on a compression ratio of the thickness.

In the present invention, it is preferable to compress the part in which the thickness is small in the thickness direction.

In order to compress the layer, for example, a method of using a presswork machine (FSP1-600S, manufactured by Fuji Steel Industry Ltd.) is preferable. Among the coating layers, the thickness of the bubble layer is mainly reduced.

Although the level depends on the degree of increasing the conductor occupancy in the stator, a compressed part in the cross section of the bubble layer can be varied, according to a method of compressing the layer in the thickness direction.

In the present invention, when the shape of the conductor is rectangular, the thickness of any side of four sides in a rectangular cross section may be reduced.

Preferable aspects of the present invention are as described below.

(i) The thickness of the coating layer of one side in the rectangular cross section is made smaller than the thickness of the coating layer of other sides.
(ii) Both of the thicknesses of coating layers of two short sides facing to each other in the rectangular cross section are made smaller than thicknesses of coating layers of two long sides facing to each other.
(iii) Both of the thicknesses of coating layers of two long sides facing to each other in the rectangular cross section are made smaller than the thicknesses of coating layers of two short sides facing to each other.
(iv) The thicknesses of coating layers of two sides adjacent to each other in the rectangular cross section are made smaller than the thicknesses of coating layers of remaining two sides.
(v) The thicknesses of coating layers of three sides in the rectangular cross section are made smaller than the thickness of the coating layer of remaining one side.

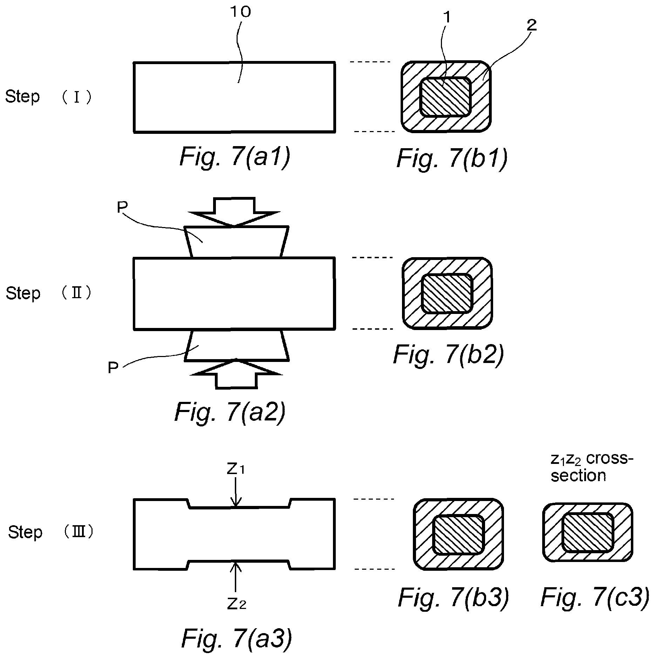

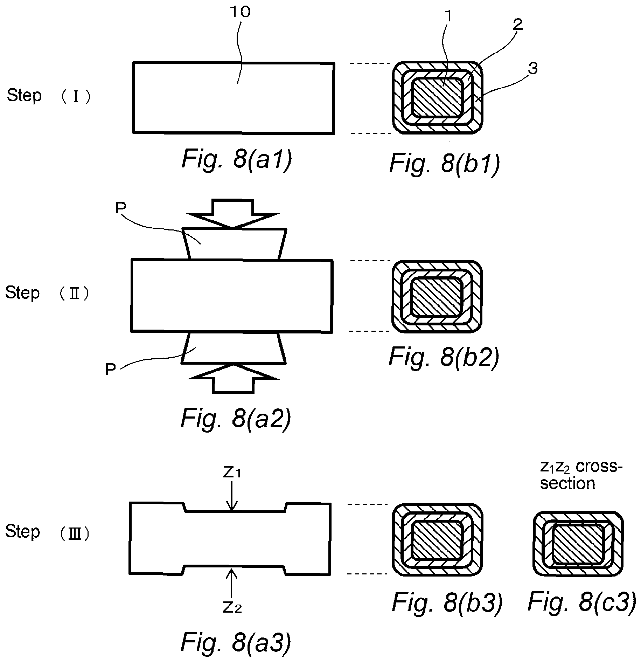

Herein, Figs. 10(a1) to 10(c3) schematically show the above-described (i), and Figs. 7(a1) to 7(c3) and Figs. 8(a1) to 8(c3) schematically show the above-described (iii).

In the above-described (i) to (v), depending on the shape of the slot and a size of the cross section of the insulated wire, as shown in Fig. 11 (b), it is preferably to reduce the thickness of the coating layer in a part in which the insulation coatings are in contact with each other in the adjacent insulated wires, and in Fig. 11 (b), two long sides facing to each other are in contact with each other, and thus (iii) is preferable.

In addition, also when the shape of the conductor is circular, the thickness can be reduced by a method similar to the method when the shape is rectangular.

A method corresponding to the above-described (iii) in the rectangular shape among these is schematically shown in Figs. 9(a1) to 9(c3).

«Method of producing a stator for a rotating electrical machine»

In the stator for the rotating electrical machine, the insulated wire of the present invention is used, and upon arranging the insulated wire in the stator slot, it is preferable to preliminarily reduce the thickness of the coating of the insulated wire positioned in a boundary between the insulated wires adjacent to each other in the stator slot.

Specifically, the insulated wire, the thickness of the coating of which is preliminarily reduced, is assembled by a usual manner.

«Rotating electrical machine and producing method of the same»

The insulated wire of the present invention can be used in various electrical equipment and electronic equipment. In particular, the insulated wire of the present invention is processed into the coil and used in the motor, a transformer, and the like, and can constitute high performance electrical equipment. Above all, the insulated wire is preferably used as a winding wire for a driving motor of HV (hybrid vehicle) or EV (electric vehicle).

Among these, when the insulated wire is used in the rotating electrical machine, such as the motor, as shown in Figs. 2(a) and 2(b), the insulated wire is cut and turn-processed into the U-shape or the like, and open end portions b2 (11 b2) being two ends having U-shape of a plurality of insulated wires having U-shape are alternately connected to form the coils, and the resultant coils are housed in the slots 22 of the stator core. In addition, on the above occasion, connection of the open end portions b2 (11 b2) includes: a method 1 in which the connection is made and then the coils are housed in the slots 22; and a method 2 in which no connection is made, and all of the insulated wire divided segments 11 are housed in the slots 22, and then processed by bending to make the connection. In the present invention, application of any of these methods is allowed.

As shown in Fig. 2(a), the coil (insulated wire divided segments) 11 of the insulated wire having U-shape or the like is constituted of: the slot housing portion a (11 a) to be housed in the slot 22 of the stator core 20; and the coil end portions b1, b2 (11 b1, 11 b2) that are not housed in the slot and are protruded from the slot 22, and these slot housing portions having the straight-line portions are housed in the slot 22 different from each other, and the coil end portions b1, b2 (11 b1, 11 b2) are aligned in a state in which the coil end portions b1, b2 (11 b1, 11 b2) are protruded from stator planes above and below the stator 100.

In the present invention, the slot housing portion a (11 a) of the insulated wire to be arranged in the slot of the stator is compressed, and the thickness of the coating layer is preliminarily reduced.

On the above occasion, in the method 1, after the thickness of the coating layer is made thinner, the open end portions of the insulated wire divided segments 11 are processed by bending, and connected among different insulation wire divided segments.

In producing the rotating electrical machine of the present invention, the insulated wire, the stator for the rotating electrical machine, and the rotating electrical machine, can be produced, simply and inexpensively, without passing through the complicated process, by reducing the thickness of the coating layer of the slot housing portion a (11 a). Moreover, a partial discharge inception voltage can be maintained at a high level, and the conductor occupancy in the slot can be increased.

EXAMPLES

The present invention will be described in more detail based on examples given below, but the invention is not meant to be limited by these.

Comparative Example 1

Polyamideimide (PAI) [trade name: HI-406, N-methyl-2-pyrrolidone (NMP) solution containing 32% by mass of a resin component, manufactured by Hitachi Chemical Co., Ltd.] was put in a 2 L separable flask, and tetraethylene glycol dimethyl ether and triethylene glycol dimethyl ether as bubble-forming agents were added to this solution, to obtain bubble-formable varnish.

This bubble-formable varnish was applied onto a periphery of a rectangular conductor (copper having an oxygen content of 15 ppm) having a rectangular cross section (long side 3.86 mm $\times$ short side 2.36 mm, r = 0.3 mm in a curvature radius of chamfering of four corners), and the resultant conductor was baked at a furnace temperature of 500°C, to form a bubble layer having a thickness of 80 $\mu$m, and to prepare an insulated wire. A size of a bubble was 1 $\mu$m, and a foaming ratio in the bubble layer was 1.8. Relative permittivity was 2.4, which is reduced in view of 4.2 in the relative permittivity in non-foaming. Conductor occupancy in a slot was 89.2%.

(Thickness of coating layer)

The thickness of the coating layer such as the bubble layer having pores was determined from a photograph of a cross section of the insulated wire by a scanning electron microscope (SEM).

(Measurement of relative permittivity)

The relative permittivity was determined, from electrostatic capacity of an insulation layer. Specifically, the relative permittivity was calculated from a relationship between a length of an electrode and a thickness of the insulation coating, by vapor-depositing a metal electrode on a whole circumference of a coating on an outermost surface of the insulated wire, and measuring the electrostatic capacity between the conductor and the metal electrode. Herein, the electrostatic capacity of the insulation layer was measured by using LCR HiTester (model 3532-50, manufactured by Hioki E.E. Corporation), at 25°C and 100 Hz.

(A diameter of the bubbles)

A diameter of the bubbles is expressed using a value obtained by observing a cross section of the bubble layer of the coating layer by means of a scanning electron microscope (SEM), measuring diameters of 20 pieces of arbitrarily selected bubbles by a diameter-measuring mode using image-analysis/measurement software (WinROOF, manufactured by Mitani Corporation), and averaging the diameters, and calculating an average value. In addition, when a shape of the bubbles is not circular, the longest part is taken as the diameter.

(Measurement of a bulk density)

The foaming ratio was determined by dividing a bulk density of a coating resin before being foamed by a bulk density of the coating resin after being foamed in the same part.
The bulk density was determined in accordance with Method A (water displacement method) in "Plastics-Methods of determining the density and relative density of non-cellular plastics" in JIS K 7112 (1999).
Specifically, a density-measurement kit attached to Electronic Balance SX64 manufactured by Mettler Toledo International Inc. was used, and methanol was used as an immersion fluid. A layer in which the coating layer in the insulated wire was foamed, and a layer in the same part before the coating layer was foamed were peeled off, respectively, and the resultant sample was taken as each test specimen, and the density of each test specimen was calculated from the following calculation formula.

$$\text{Density of test specimen } \rho_{S,t} = (m_{S,A} \times \rho_{IL})/(m_{S,A} - m_{s,IL})$$

Herein, $m_{S,A}$ is mass (g) of the test specimen measured in the air, $m_{s,IL}$ is mass (g) of the test specimen measured in the immersion fluid, and $\rho_{IL}$ is density (g/cm$^3$) of the immersion fluid.

Example 1

In the insulated wire prepared in Comparative Example 1, a part to be inserted into a slot in a rotating electrical machine was collapsed by a presswork machine as shown in Figs. 7(a1) to 7(c3), to prepare an insulated wire in which a thickness between two long sides facing to each other in an insulation coating composed of the bubble layer was adjusted to 44 $\mu$m. Conductor occupancy of the obtained insulated wire in the slot was 91.8%, and the conductor occupancy was improved by 2.6%.

Comparative Example 2

As a screw of an extruder, a diameter 30-mm full-flight screw in which L/D = 20 and a compression ratio was 3 was used. Polyethylene terephthalate (PET) (trade name: PET resin TR-8550T, relative permittivity: 3.2, manufactured by Teijin Limited) was used as a thermoplastic resin, and onto a periphery of a rectangular conductor (copper having an oxygen content of 15 ppm) having a rectangular cross section (long side 3.4 mm × short side 1.8 mm, r = 0.3 mm in a curvature radius of chamfering of four corners), extrusion covering of PET was performed, by using an extrusion die, to be analogous to a shape of the conductor in an outer shape of a cross section of the extrusion-covering resin layer. The thus-prepared insulated wire was stored in a high-pressure vessel in which a carbon dioxide gas was filled, under conditions of a pressure of 1.7 MPa and a temperature of -30°C, for 42 hours, to penetrate the carbon dioxide gas into the coating resin.

Then, the insulated wire was removed from the high-pressure vessel, and heated under conditions of a temperature of 200°C for 1 minute, to foam the coating resin, and to prepare an insulated wire having a coating thickness of 39 $\mu$m.

A size of a bubble was 2 $\mu$m, and a foaming ratio in a bubble layer was 1.6. Relative permittivity was 2.2, which is reduced in view of 3.2 in the relative permittivity in non-foaming. Conductor occupancy in the slot was 92.5%.

Example 2

In the insulated wire prepared in Comparative Example 2, a part to be inserted into a slot in a rotating electrical machine was collapsed by a presswork machine as shown in Figs. 7(a1) to 7(c3), to prepare an insulated wire in which a thickness between two long sides facing to each other in an insulation coating composed of a bubble layer was adjusted to 24 $\mu$m. Conductor occupancy of the obtained insulated wire in the slot was 94.0%, and the conductor occupancy was improved by 1.5%.

Comparative Example 3

Polyamideimide (PAI) [trade name: HI-406, NMP solution containing 32% by mass of a resin component, manufactured by Hitachi Chemical Co., Ltd.] was put in a 2L separable flask, and tetraethylene glycol dimethyl ether and triethylene glycol dimethyl ether as bubble-forming agents were added to this solution, to obtain bubble-formable varnish.

This bubble-formable varnish was applied onto a periphery of a rectangular conductor (copper having an oxygen content of 15 ppm) having a rectangular cross section (long side 3.4 mm × short side 1.8 mm, r = 0.3 mm in a curvature radius of chamfering of four corners), and the resultant conductor was baked at a furnace temperature of 500°C, to form a bubble layer having a thickness of 40 $\mu$m. A size of a bubble was 5 $\mu$m, and a foaming ratio in the bubble layer was 1.9. Relative permittivity was 2.3, which is reduced in view of 4.2 in the relative permittivity in non-foaming.

The insulated wire in which the bubble layer was formed on the above-described conductor was applied as a core wire, and as a screw of an extruder, a diameter 30 mm-full-flight screw in which L/D = 20 and a compression ratio was 3 was used, to form an extrusion-covering resin layer as described below.

Polyether ether ketone (PEEK) (trade name: KetaSpire KT-820, relative permittivity: 3.1, manufactured by Solvay Specialty Polymers Japan K.K.) was used as a thermoplastic resin, and extrusion covering of PEEK was performed by using an extrusion die, to be analogous to a shape of the conductor in an outer shape of a cross section of the extrusion-covering resin layer, to form the extrusion-covering resin layer having a thickness of 40 $\mu$m, and to prepare an insulated wire. Conductor occupancy in a slot was 86.6%.

Example 3

In the insulated wire prepared in Comparative Example 3, a part to be inserted into a slot in a rotating electrical machine was collapsed by a presswork machine as shown in Figs. 8(a1) to 8(c3), to prepare an insulated wire in which only a thickness between two long sides facing to each other in a bubble layer was adjusted to 32 $\mu$m, in an insulation coating composed of the bubble layer and the extrusion-covering resin layer. Conductor occupancy of the obtained insulated wire in the slot was 87.3%, and the conductor occupancy was improved by 0.7%.

Comparative Example 4

As a screw of an extruder, a diameter 30 mm-full-flight screw in which L/D = 20 and a compression ratio was 3 was used. Polyphenylene sulfide (PPS) (trade name: FZ-2100, relative permittivity: 3.2, manufactured by DIC Corporation) was used as a thermoplastic resin, and onto a periphery of a conductor (copper having an oxygen content of 15 ppm) having a circular cross section ($\varphi$ 1.0 mm), extrusion covering of PPS was performed by using an extrusion die. The thus-prepared insulated wire was stored in a high-pressure vessel in which a carbon dioxide gas was filled, under conditions of a pressure of 1.2 MPa and a temperature of -32°C, for 24 hours, to penetrate the carbon dioxide gas into a coating resin.

Then, the insulated wire was removed from the high-pressure vessel, and heated under conditions of a temperature of 200°C, for 1 minute, to foam the coating resin, and to prepare an insulated wire having a coating thickness of 40 $\mu$m.

A size of a bubble was 8 $\mu$m, and a foaming ratio in the bubble layer was 1.4. Relative permittivity was 2.4, which is reduced in view of 3.2 in the relative permittivity in non-foaming. Conductor occupancy in a slot was 85.7%.

Example 4

In the insulated wire prepared in Comparative Example 4, a part to be inserted into a slot in a rotating electrical machine was collapsed by a presswork machine as shown in Figs. 9(a1) to 9(c3), to prepare an insulated wire in which a thickness of a part in Fig 9(c3) in an insulation coating composed of a bubble layer was adjusted to 27 $\mu$m. Conductor occupancy in the slot was 86.1 %, and the conductor occupancy was improved by 0.4%.

As is obvious from the producing methods in Examples 1 to 4, the insulated wires and the rotating electrical machine that were excellent in the durability were able to be obtained, simply and inexpensively in terms of costs, without passing through any complicated process.

Having described our invention as related to the present embodiments, it is our intention that the invention not be limited by any of the details of the description, unless otherwise specified, but rather be construed broadly within its spirit and scope as set out in the accompanying claims.

This application claims a priority on Patent Application No. 2014-051924 filed in Japan on March 14, 2014, which is entirely herein incorporated by reference.

REFERENCE SIGNS LIST

|   |   |
|---|---|
| 10 | Insulated wire |
| 1 | Conductor |
| 2 | Coating layer (bubble layer) |
| 3 | Coating layer (layer having no bubble) |
| 11 | Coil (insulated wire divided segment) |
| a | Slot housing portion (slot straight-line portion) |
| b1 | Turn portion having U shape at the coil end portion |
| b2 | Open end portion at the coil end portion |
| 11$\alpha$ | First coil (first insulated wire divided segment) |
| 11$\beta$ | Second coil (second insulated wire divided segment) |
| 100 | Stator |
| 20 | Stator core |
| 21 | Teeth |
| 22 | Slot |
| P | Presswork machine |

**Claims**

1. An insulated wire having a conductor coated with at least one layer of an insulating material, and having at least one layer of a bubble layer in a thickness direction in a coating layer, wherein the insulated wire has a part in which a thickness is small in a length direction or a circumferential direction in an identical coating layer.

2. The insulated wire according to claim 1, wherein the part in which the thickness is small is compressed in the thickness direction and the thickness is reduced.

3. The insulated wire according to claim 1 or 2, wherein a resin in the coating layer is a resin selected from polyester, polyesterimide, polyimide, polyamideimide, polyphenylene sulfide and polyether ether ketone.

4. The insulated wire according to any one of claims 1 to 3, wherein a resin in the bubble layer is a thermosetting resin selected from polyester, polyesterimide, polyimide and polyamideimide, or a thermoplastic resin selected from polyethylene naphthalate, polyethylene terephthalate, polyphenylene sulfide and polyether ether ketone.

5. The insulated wire according to any one of claims 1 to 4, wherein the coating layer is composed of the bubble layer and at least one layer having no bubble, and a resin in the layer having no bubble is a thermoplastic resin selected from polyphenylene sulfide and polyether ether ketone.

6. The insulated wire according to any one of claims 1 to 5, wherein a cross-sectional shape of the conductor is circular or rectangular.

7. The insulated wire according to any one of claims 1 to 6, where a cross-sectional shape of the conductor is rectangular, and a thickness of the coating layer of one side in a rectangular cross section is smaller than a thickness of the coating layer of the other sides.

8. The insulated wire according to any one of claims 1 to 6, wherein a cross-sectional shape of the conductor is rectangular, and both of thicknesses of the coating layer of two short sides facing to each other in a rectangular cross section are smaller than thicknesses of the coating layer of two long sides facing to each other.

9. The insulated wire according to any one of claims 1 to 6, wherein a cross-sectional shape of the conductor is rectangular, and both of thicknesses of the coating layer of two long sides facing to each other in a rectangular cross section are smaller than thicknesses of the coating layer of two short sides facing to each other.

10. The insulated wire according to any one of claims 1 to 6, wherein a cross-sectional shape of the conductor is rectangular, and thicknesses of the coating layer of two sides adjacent to each other in a rectangular cross section are smaller than thicknesses of the coating layer of remaining two sides.

11. The insulated wire according to any one of claims 1 to 6, wherein a cross-sectional shape of the conductor is rectangular, and thicknesses of the coating layer of three sides in a rectangular cross section are smaller than a thickness of the coating layer of a remaining one side.

12. A method of producing the insulated wire according to any one of claims 1 to 11, wherein the coating layer is compressed in a thickness direction, to form the part in which the thickness is small in the length direction or the circumferential direction in an identical coating layer.

13. A method of producing a stator for a rotating electrical machine having an insulated wire, wherein the insulated wire has a conductor coated with at least one layer of an insulating material and having at least one layer of a bubble layer in a thickness direction in a coating layer, and upon arranging the insulated wire in a slot of a stator, a thickness of a coating of the insulated wire positioned in a boundary between the insulated wires adjacent to each other in the slot of the stator is preliminarily reduced.

14. The method of producing the stator for the rotating electrical machine according to claim 13, wherein a coating of the insulated wire is compressed in a thickness direction and a thickness thereof is reduced.

15. A rotating electrical machine, comprising the insulated wire according to any one of claims 1 to 11.

Fig. 1(a)

Fig. 1(b)

Fig. 2(a)

Fig. 2(b)

Fig. 3(a)

Fig. 3(b)

11α
11β

21
22
100

Fig. 4

11
100

Fig. 5

Fig. 6(a)

Fig. 6(b)

Step （I）

Fig. 7(a1)

Fig. 7(b1)

Step （II）

Fig. 7(a2)

Fig. 7(b2)

$z_1 z_2$ cross-section

Step （III）

Fig. 7(a3)

Fig. 7(b3)    Fig. 7(c3)

Step (I)

*Fig. 8(a1)*

*Fig. 8(b1)*

Step (II)

*Fig. 8(a2)*

*Fig. 8(b2)*

Step (III)

$z_1z_2$ cross-section

*Fig. 8(a3)*

*Fig. 8(b3)*    *Fig. 8(c3)*

Step （Ⅰ）

*Fig. 9(a1)*

*Fig. 9(b1)*

Step （Ⅱ）

P

P

*Fig. 9(a2)*

*Fig. 9(b2)*

Step （Ⅲ）

$z_1$

$z_2$

*Fig. 9(a3)*

$z_1z_2$ cross-section

27 $\mu$ m

*Fig. 9(b3)*

*Fig. 9(c3)*

Step （I）

*Fig. 10(a1)*

*Fig. 10(b1)*

Step （II）

P

*Fig. 10(b2)*

*Fig. 10(a2)*

Step （III）

$Z_1$

$Z_2$

*Fig. 10(a3)*

$z_1z_2$ cross-section

*Fig. 10(b3)*

*Fig. 10(c3)*

Fig. 11(a)

Fig. 11(b)

## INTERNATIONAL SEARCH REPORT

| International application No. |
| --- |
| PCT/JP2015/057021 |

A. CLASSIFICATION OF SUBJECT MATTER
*H01B7/02*(2006.01)i, *H01B3/30*(2006.01)i, *H01B3/42*(2006.01)i, *H01B7/00*
(2006.01)i, *H01B13/00*(2006.01)i, *H01B13/16*(2006.01)i, *H02K3/04*(2006.01)i,
*H02K3/34*(2006.01)i

According to International Patent Classification (IPC) or to both national classification and IPC

B. FIELDS SEARCHED

Minimum documentation searched (classification system followed by classification symbols)
H01B7/02, H01B3/30, H01B3/42, H01B7/00, H01B13/00, H01B13/16, H02K3/04,
H02K3/34

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2008-236924 A  (Hitachi, Ltd.),<br>02 October 2008 (02.10.2008),<br>paragraphs [0011] to [0014]<br>& US 2008/0231136 A1 | 1-12,15<br>13-14 |
| Y<br>A | JP 5391365 B1  (The Furukawa Electric Co.,<br>Ltd.),<br>15 January 2014 (15.01.2014),<br>paragraphs [0001], [0022] to [0027]<br>& US 2014/0354394 A1   & WO 2013/133333 A1<br>& EP 2824674 A1       & TW 201346942 A<br>& CN 103650065 A      & CA 2864071 A1<br>& KR 10-2014-0102124 A | 1-12,15<br>13-14 |

| ☒ Further documents are listed in the continuation of Box C. | ☐ See patent family annex. |
| --- | --- |

* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>03 June 2015 (03.06.15) | Date of mailing of the international search report<br>16 June 2015 (16.06.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/057021

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 5391324 B1 (The Furukawa Electric Co.,<br>Ltd.),<br>15 January 2014 (15.01.2014),<br>paragraphs [0023] to [0028]<br>& US 2015/0027748 A1 & WO 2014/084101 A1<br>& EP 2843668 A1 & CA 2869921 A1<br>& CN 104170025 A & TW 201435928 A | 3-5<br>1-2,6-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008236924 A
- JP 5391365 B
- JP 2011 A
- JP 238384 A
- JP 4177295 B
- JP 2014051924 A